# EUROPÄISCHE PATENTSCHRIFT

(11) **EP 2 539 096 B1**
(45) Veröffentlichungstag und Bekanntmachung des Hinweises auf die Patenterteilung: **22.01.2014**
(21) Anmeldenummer: 11707127.4
(22) Anmeldetag: 22.02.2011
(51) Int. Cl.: B23C 3/12, B23C 5/12, B27D 5/00

(54) **VORRICHTUNG ZUM BEARBEITEN DER SCHMALFLÄCHEN VON BEVORZUGT PLATTENFÖRMIGEN WERKSTÜCKEN**
DEVICE FOR TREATING THE NARROW SURFACES, IN PARTICULAR, OF PLATE-SHAPED WORKPIECES
DISPOSITIF POUR LE TRAITEMENT DES SURFACES ETROITES, EN PARTICULIER, DE PIECES EN FORME DE PLAQUE

(30) Priorität: 26.02.2010 DE 102010009525
(43) Veröffentlichungstag der Anmeldung: 02.01.2013
(73) Patentinhaber: Homag Holzbearbeitungssysteme AG, 72296 Schopfloch (DE)
(72) Erfinder: RATHGEBER, Peter, 72280 Dornstetten (DE); KALMBACH, Wilhelm, 72296 Schopfloch (DE)
(74) Vertreter: HOFFMANN EITLE
(86) Internationale Anmeldenummer: PCT/EP2011/052580
(87) Internationale Veröffentlichungsnummer: WO 2011/104221

(56) Entgegenhaltungen:
- EP-A1- 0 587 102
- EP-A1- 2 072 201
- EP-A2- 0 446 907
- DE-A1- 2 726 610

## Beschreibung

### Technisches Gebiet

Die vorliegende Erfindung bezieht sich auf eine Vorrichtung zum Bearbeiten der Schmalflächen von bevorzugt plattenförmigen Werkstücken, die zumindest abschnittsweise aus Holz, Holzwerkstoffen, Kunststoff oder dergleichen bestehen.

Solche plattenförmigen Werkstücke werden beispielsweise in der Möbelindustrie weiterverarbeitet. Bedingt durch die Toleranzen der Materialstärke werden Bearbeitungen ah den Werkstückschmalflächen, wie z.B. eine Profilbearbeitung oder die Nachbearbeitung von angeleimten Kanten mittels Kopierverfahren durchgeführt, um eine Führung des Werkzeugs entlang der tatsächlichen Werkstückgeometrie zu erreichen. Auch aufspannungsbedingte Lagetoleranzen des Werkstücks können dadurch kompensiert werden.

Bei der Kopierbearbeitung ist eine Tasteinrichtung mit einem Tastelement, in der Regel einer Tastrolle vorgesehen, die auf der Werkstückoberfläche abrollt und die Lage des Werkzeugs relativ zum Werkstück steuert.

### Stand der Technik

Aus der EP 2 191948 A1 ist eine Vorrichtung der eingangs genannten Art bekannt. Hier ist die Tastrolle neben und koaxial zum Fräser angebracht, was einen besonders einfachen kinematischen Aufbau ermöglicht. Es sind daher keine separaten Trägerarme für die Tastrollen notwendig, sondern die Tastrolle wird beispielsweise direkt auf einem Werkzeughalter der Werkzeuganordnung vorgesehen. Dadurch verringert sich das Gewicht der während der Schmalflächenbearbeitung zu bewegenden Teile und somit auch die notwendige Antriebsleistung.

Wenn sich bei dieser Anordnung der Werkzeugdurchmesser durch Abnutzung oder ein Nachschärfen verändert, muss auch die Tastrolle angepasst werden, um eine gleichbleibende Lagezuordnung von Werkstück und Werkzeug beizubehalten. Ferner ist unter Umständen auch eine Anpassung der Tastrolle dann erforderlich, wenn zwar die Bearbeitungsgeometrie von Werkzeug und Werkstück gleich bleibt, jedoch auf ein anderes Werkstoffmaterial mit einer anderen Festigkeit gewechselt wird, da sich die Tastrolle dann verändert in den Werkstoff eindrückt.

Bei dieser Anordnung kann die Tastrolle ausgetauscht und durch eine im Durchmesser angepasste Tastrolle ersetzt werden. Dies nimmt Zeit in Anspruch und erhöht daher die Stillstandszeit der Maschine.

Als weiterer Stand der Technik ist die EP 0 587 102 A1 bekannt, die auf einen weiteren Stand der Technik Bezug nimmt. Demnach ist es bekannt, bei unveränderlichem Flugkreis des Fräswerkzeuges die Tastrolle mit einem elastischen Ring zu versehen, der durch einen Keil so gespreizt werden kann, dass sein Außendurchmesser relativ zum Flugkreis des Fräswerkzeuges veränderbar ist.

### Darstellung der Erfindung

Es ist daher Aufgabe der vorliegenden Erfindung eine Vorrichtung zum Bearbeiten der Schmalflächen von bevorzugt plattenförmigen Werkstücken, die bevorzugt zumindest abschnittsweise aus Holz, Holzwerkstoffen, Kunststoff oder dergleichen bestehen bereitzustellen, die es beim Einsatz von wenigstens einer Tastrolle zur gleichbleibende Lagezuordnung von Werkstück und Werkzeug ermöglicht, einen Werkzeugverschleiß ohne Auswechseln der Tastrolle auszugleichen und die Maschinenstillstandszeiten möglichst gering zu halten. Die Tastrolle soll dabei kompakt sein, um ein möglichst großes Einsatzspektrum hinsichtlich der Werkstückgeometrie zu ermöglichen.

Erfindungsgemäß wird diese Aufgabe durch eine Vorrichtung zum Bearbeiten von bevorzugt plattenförmigen Werkstücken mit den Merkmalen des Patentanspruchs 1 gelöst.

Demgemäß weist eine Vorrichtung zum Bearbeiten von bevorzugt plattenförmigen Werkstücken, die bevorzugt zumindest abschnittsweise aus Holz, Holzwerkstoffen, Kunststoff oder dergleichen bestehen, eine auf das Werkstück einwirkende Werkzeuganordnung, die zumindest ein Werkzeug aufweist, auf. Bevorzugt ist das Werkzeug ein rotierendes Werkzeug, beispielsweise ein Fräswerkzeug. Die Vorrichtung weist in diesem Fall eine Welle auf, an der das Werkzeug fest angebracht ist und mit der es gedreht wird. Das Werkstück ist beispielsweise eine Spanplatte mit angeleimter Kante, die für einen exakten Kantenabschluss oder für eine Formgebung der angeleimten Kante spanend nachbearbeitet werden soll. Hierfür werden häufig Fräser eingesetzt. Profilfräser erlauben eine weitergehende Formgebung der angeleimten Kante. Alternativ dazu kann das Werkzeug aber auch ein translatorisch bewegtes Werkzeug sein, beispielsweise ein Ziehstahl oder eine Ziehklinge.

Die erfindungsgemäße Vorrichtung weist ferner eine Tasteinrichtung mit wenigstens einer Tastrolle auf, die um ihre Rotationsachse drehbar neben dem Werkzeug angeordnet ist und die die Lage des Werkzeugs relativ zum Werkstück steuert. Die Anordnung der Tastrolle in der erfindungsgemäßen Vorrichtung neben dem Werkzeug ist besonders einfach, da dadurch kein separater Tragarm für die Tastrolle notwendig ist. Dadurch ist das Gewicht der während der Kantenbearbeitung zu bewegenden Teile verringert, wodurch sich ein besonders gutes Beschleunigungs- und Nachführverhalten ergibt. Die geringe Anzahl der Komponenten zwischen Werkzeug und Tastrolle ermöglicht eine besonders hohe Systemsteifigkeit, hohe Genauigkeit im Konturfolgeverhalten und damit präzise Bearbeitung. Mit der erfindungsgemäßen Vorrichtung ist es außerdem nicht mehr notwendig, die relative Lage zwischen dem Tastelement und dem jeweils verwendeten Werkzeug nach einem Werkzeugwechsel einzustellen. Jedem Werkzeug ist ein Tastelement fest zugeordnet, und die relative Lage zwischen dem Werkzeug und dem zugehörigen Tastelement bleibt prinzipiell unverändert. Der Werkzeugwechsel wird dadurch deutlich vereinfacht und verkürzt.

Gemäß der vorliegenden Erfindung ist ein Durchmesser der Tastrolle verstellbar. Gemeint ist, dass ein Durchmesser der Tastrolle verstellbar ist, der vorgesehen ist, auf der Werkstückoberfläche abzurollen, um die Lage des Werkzeugs relativ zum Werkstück zu steuern. Durch das Verstellen dieses Durchmessers wird die Lage des Werkzeugs relativ zum Werkstück verändert. In der Regel wird es so sein, dass eine Vergrößerung des Tastrollendurchmessers den Abstand des Werkzeugs zum Werkstück vergrößert und umgekehrt. Im Falle von einem Werkzeugverschleiß z.B. bei einem Fräser und dem sich damit verringernden Durchmesser des Kreises, den seine Schneiden beschreiben, wenn der Fräser rotiert, kann eine Anpassung derart erfolgen, dass der Tastrollendurchmesser verringert wird. Der Fräser wird dadurch näher an die Werkstückoberfläche herangebracht, wodurch der Werkzeugverschleiß ausgeglichen werden kann. Ein Austausch der Tastrolle ist dadurch - in gewissen Grenzen - nicht mehr erforderlich. Die durch das Auswechseln der Tastrolle bedingten Maschinenstillstandszeiten können so reduziert werden. Ferner wird auch das Einfahren vereinfacht. Die Tastrolle wird dazu auf einen mittleren Durchmesser eingestellt. Anschließend kann je nach Arbeitsergebnis eine Feinjustierung mittels der Durchmessereinstellung der Tastrolle durchgeführt werden, ohne dass umfangreichere Umrüstarbeiten, z.B. der Wechsel auf eine andere Tastrolle erforderlich sind.

Gemäß der vorliegenden Erfindung weist die Tastrolle einen Ring, insbesondere einen Metallring und/oder Kunststoffring auf, der konzentrisch zur Rotationsachse dehnbar ist. Dieser Ring bildet besonders bevorzugt mit einem Außenumfang direkt die Lauffläche der Tastrolle. Durch das Dehnen des Rings wird der Durchmesser der Tastrolle verändert. Zum Dehnen des Rings wird die Tastrolle bevorzugt im Inneren hydraulisch mit einem Druck beaufschlagt. Ein Druckübertragungsmittel gemäß einer ersten Alternative zur Einleitung des Drucks ist wenigstens teilweise im Inneren der Tastrolle angeordnet, wodurch sich ein besonders kompakter Aufbau der Tastrolle ergibt.

Bevorzugt kommt als Druckübertragungsmittel ein Kolben zum Einsatz, der wenigstens teilweise innerhalb der Tastrolle verläuft. Durch die wenigstens teilweise Unterbringung des Kolbens in der Tastrolle ist ein platzsparender Aufbau möglich. Dabei kann der Kolben beispielsweise mit einem hydraulischen oder pneumatischen Druck beaufschlagt werden. Alternativ sind auch andere Druckerzeigungsmittel möglich, wie beispielsweise Spindeln oder dergleichen.

Bevorzugt ist der Kolben piezoelektrisch angetrieben, wodurch es ermöglich wird, den Kolben mit Antrieb besonders klein zu bauen und ggf. in die Tastrolle zu integrieren.

Gemäß einer weiteren Alternative der vorliegenden Erfindung ist der Ring innen wenigstens teilweise konisch geformt und ein außen wenigstens teilweise konisch geformtes Element vorgesehen. Durch axiales verschieben des konischen Elementes gegen den Ring im Wesentlichen entlang der Rotationsachse der Tastrolle kann dieser gedehnt werden. Dies kann alternativ oder ergänzend zu einer inneren Druckbeaufschlagung des Kolbens vorgesehen werden. Bevorzugt ist die Tastrolle durch axiales Quetschen des äußeren Rings in ihrem Durchmesser verstellbar. Hierbei wirken die Kräfte in axialer Richtung der Tastrolle, was Vorteile in der Realisierung insbesondere bei Tastrollen mit kleinen Durchmessern bietet.

In den weiteren Unteransprüchen finden sich vorteilhafte Ausgestaltungen und Verbesserungen der Erfindung.

Gemäß einer bevorzugten Weiterbildung der vorliegenden Erfindung ist die Tastrolle mit ihrer Rotationsachse koaxial zur Werkzeugachse eines um eine Werkzeugachse rotierenden Werkzeugs, insbesondere eines Fräser angeordnet. Dadurch entsteht eine besonders einfach zu steuernde Kinematik, da die Rotationsachsen von Werkzeug und Tastrolle zusammenfallen. Werden bei dieser Anordnung mit der Tastrolle in einer Ebene gekrümmte Kanten von Werkstücken abgefahren, ist eine Lagezuordnung von Werkzeug zu Werkstück einfach realisierbar, wenn die Rotationsachse von Werkzeug bzw. Tastrolle im Wesentlichen senkrecht zur Ebene verläuft. Bevorzugt ist die Tastrolle dabei direkt zusammen mit einem rotierenden Werkzeug auf einer Motorwelle als Werkzeugträger angeordnet.

### Kurze Beschreibung der Zeichnungen

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Schnittdarstellung einer konventionellen Vorrichtung zum Bearbeiten mit einer Tastrolle und einem Werkzeug an einem Werkstück;
- Fig. 2: eine schematische Schnittdarstellung einer erfindungsgemäßen Vorrichtung zum Bearbeiten mit einer im Durchmesser verstellbaren Tastrolle und einem Werkzeug an einem Werkstück gemäß einem ersten Ausführungsbeispiel; und
- Fig. 3: eine schematische Schnittdarstellung einer erfindungsgemäßen Vorrichtung zum Bearbeiten mit einer im Durchmesser verstellbaren Tastrolle und einem Werkzeug an einem Werkstück gemäß einem zweiten Ausführungsbeispiel.

In den Figuren bezeichnen dieselben Bezugszeichen gleiche oder funktionsgleiche Komponenten, soweit nichts Gegenteiliges angegeben ist.

### Ausführliche Beschreibung der bevorzugten Ausführungsformen

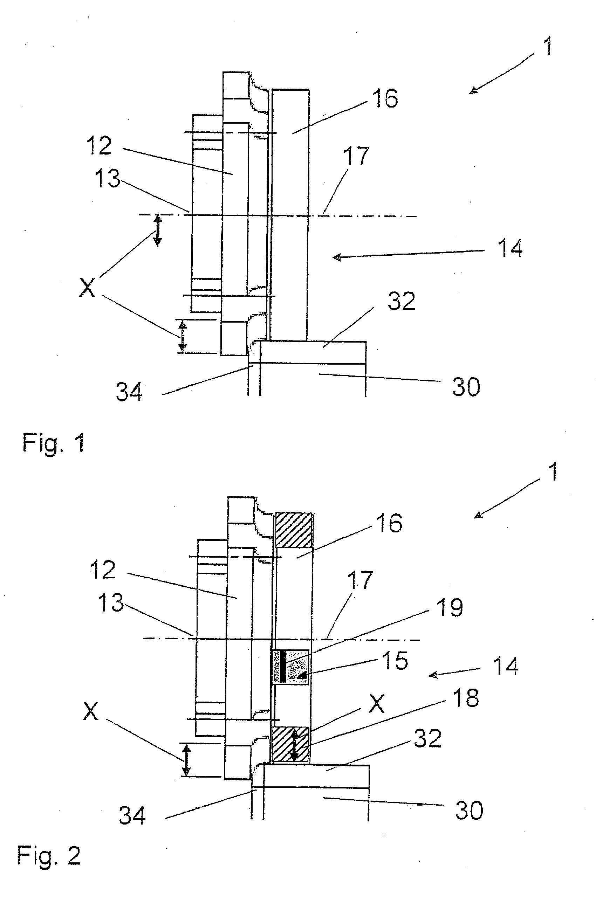

Fig. 1 zeigt eine schematische Schnittdarstellung einer konventionellen Vorrichtung zum Bearbeiten 1 von bevorzugt plattenförmigen Werkstücken 30, die bevorzugt zumindest abschnittsweise aus Holz, Holzwerkstoffen, Kunststoff oder dergleichen bestehen mit einer Tastrolle 16 und einem Werkzeug 12 an einem Werkstück 30. Das Werkzeug 12 ist bei diesem Ausführungsbeispiel ein Fräser 12, dessen Achse 13 horizontal in der Bildebene verläuft. Die Werkzeugachse 13 verläuft auf der Rotationsachse 17 einer koaxial zu dem Fräser 12 angeordneten Tastrolle 16 einer Tasteinrichtung 14. Sowohl der Fräser 12 als auch die Tastrolle 16 liegen stirnseitig auf dem Werkstück 30 auf, das rechteckähnlich dargestellt ist.

Am Werkstück 30 ist an der im Bild linken Seite eine Kante 34 angeleimt. Der vertikale Überstand dieser Kante 34 angrenzend an einen Rand 32 des Werkstücks 30 wird mit dem Fräser 12 abgefräst. Mit einem Doppelpfeil X ist ein achsialer Versatz des Werkzeuges dargestellt, der erforderlich wäre, um einen entsprechenden, ebenfalls mit einem Doppelpfeil X dargestellten Werkzeugverschleiß bei gleichbleibendem Tastrollendurchmesser auszugleichen, um ein unverändertes Arbeitsergebnis zu erzielen.

Fig. 2 zeigt eine schematische Schnittdarstellung einer erfindungsgemäßen Vorrichtung zum Bearbeiten mit einer im Durchmesser verstellbaren Tastrolle 16 und einem Werkzeug 12 an einem Werkstück 30 gemäß einem ersten Ausführungsbeispiel der vorliegenden Erfindung. Die dargestellten Elemente entsprechen im Wesentlichen denen aus Figur 1, jedoch ist eine erfindungsgemäße Tasteinrichtung 14 mit einer in ihrem Durchmesser verstellbaren Tastrolle 16 verbaut. Für einen am Fräser 12 durch den Doppelpfeil X dargestellten Verschleiß, der eine Reduzierung des effektiven Durchmessers des Fräsers 12 bewirkt, ist eine entsprechende Reduzierung des Durchmessers der Tastrolle 16 erforderlich, der ebenfalls mit einem Doppelpfeil X angegeben ist. Der Durchmesser der Tastrolle 16 wird verändert, indem ein äußerer Ring 18 der Tastrolle 16 radial gedehnt oder entspannt wird. Der äußere Ring kann beispielsweise aus Metall und/oder Kunststoff, aber auch anderen geeigneten Materialien bestehen.

Ein in das Innere der Tastrolle 16 hineinreichendes Druckübertragungsmittel 15, das in der vorliegenden Ausführungsform einen hydraulischen Kolben 19 aufweist, überträgt hierbei einen Druck, der den Ring 18 der Tastrolle 16 konzentrisch dehnt. Zu diesem Zweck kann innerhalb der Tastrolle 16 ein Druckmedium wie beispielsweise eine Hydraulikflüssigkeit vorgesehen sein, die durch den hydraulischen Kolben 19 beaufschlagt wird und so den Ring 18 der Tastrolle 16 dehnt.

Der von außen auf das Druckübertragungsmittel 15 bzw. hydraulischen Kolben 19 aufgebrachte Druck kann beispielsweise durch eine externe Druckquelle oder andere geeignete Mittel bereitgestellt werden. Ebenso kann jedoch auch der gesamte Druckerzeugungsmechanismus ganz oder teilweise innerhalb der Tastrolle 16 vorgesehen sein.

Insgesamt wird eine Durchmessereinstellung der Tastrolle 16 ermöglicht, die geeignet ist, beispielsweise einen Werkzeugverschleiß auszugleichen.

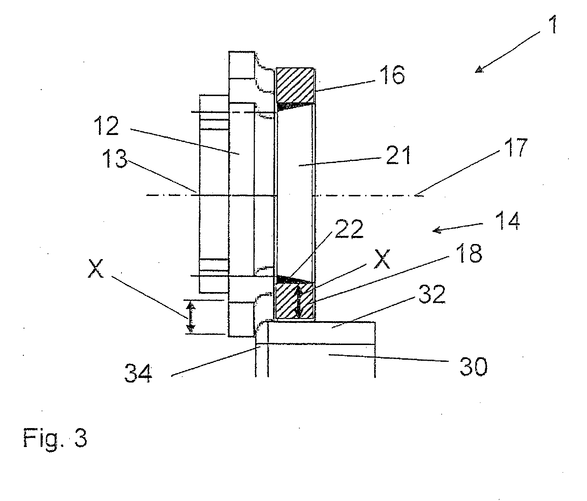

Fig. 3 eine schematische Schnittdarstellung einer erfindungsgemäßen Vorrichtung zum Bearbeiten mit einer im Durchmesser verstellbaren Tastrolle 16 und einem Werkzeug 12 an einem Werkstück 30 gemäß einem zweiten Ausführungsbeispiel. Die Vorrichtung entspricht der ersten Ausführungsform, allerdings ist anstelle des Druckübertragungsmittels 15 und des hydraulischen Kolbens 19 ein am Außenumfang konisches Element 21 konzentrisch an der Tastrolle 16 vorgesehen und der Ring 18 weist innen eine konische Fläche 22 auf. Durch Anpressen des konischen Elementes 21 gegen die konische Fläche 22 des Rings 18 kann der Ring 18 gedehnt werden und sein Durchmesser eingestellt werden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Vorrichtung
- 12: Werkzeug
- 13: Werkzeugachse
- 14: Tasteinrichtung
- 15: Druckübertragungsmittel
- 16: Tastrolle
- 17: Rotationsachse
- 18: Ring
- 19: (hydraulischer) Kolben
- 21: konisches Element
- 22: konische Innenfläche
- 30: Werkstück
- 32: Rand
- 34: Kante
- X: Zustellung

## Patentansprüche

1. Vorrichtung (1) zum Bearbeiten von bevorzugt plattenförmigen Werkstücken (30), die bevorzugt zumindest abschnittsweise aus Holz, Holzwerkstoffen, Kunststoff oder dergleichen bestehen, mit einer auf das Werkstück (30) einwirkenden Werkzeuganordnung, die zumindest ein Werkzeug (12) aufweist, und einer Tasteinrichtung (14) mit wenigstens einer Tastrolle (16), die um ihre Rotationsachse (17) drehbar neben dem Werkzeug (12) angeordnet ist und die die Lage des Werkzeugs (12) relativ zum Werkstück (30) steuert, wobei ein Durchmesser der Tastrolle (16) verstellbar ist, und die Tastrolle (16) einen Ring (18) aufweist, der konzentrisch zur Rotationsachse (17) dehnbar ist,
**dadurch gekennzeichnet, dass**
a) die Tasteinrichtung (14) ein Druckübertragungsmittel (15) zur inneren Druckbeaufschlagung des Rings (18) aufweist,
oder
b) der Ring (18) innen wenigstens teilweise konisch geformt ist und ein außen wenigstens teilweise konisch geformtes Element (21) vorgesehen ist und durch axiales verschieben des konischen Elementes (21) gegen den Ring (18) im Wesentlichen entlang der Rotationsachse (17) der Tastrolle (16) dieser gedehnt werden kann.

2. Vorrichtung (1) nach Anspruch 1,
**dadurch gekennzeichnet,**
**dass** das Werkzeug (12) um eine Werkzeugachse (13) rotierend, insbesondere ein Fräser, ist und die Tastrolle (16) mit ihrer Rotationsachse (17) koaxial zur Werkzeugachse (13) angeordnet ist.

3. Vorrichtung (1) nach Anspruch 1,
**dadurch gekennzeichnet,**
**dass** das Druckübertragungsmittel (15) einen Kolben (19) zum Druckaufbau aufweist, der wenigstens teilweise innerhalb der Tastrolle (16) verläuft.

4. Vorrichtung (1) nach Anspruch 3,
**dadurch gekennzeichnet,**
**dass** der Kolben (19) piezoelektrisch angetrieben ist.

5. Vorrichtung (1) nach einem der Ansprüche 1 bis 4,
**dadurch gekennzeichnet,**
**dass** die Tastrolle (16) durch axiales Quetschen des äußeren Rings (18) in ihrem Durchmesser verstellbar ist.

6. Vorrichtung (1) nach einem Anspruch 1, **dadurch gekennzeichnet, dass** der Ring (18) ein Metallring und/oder Kunststoffring ist.

## Claims

1. Apparatus (1) for processing preferably board-like workpieces (30) which are preferably at least in sections made of wood, derived timber products, plastic or the like, having a tool assembly which acts on the workpiece (30) and which has at least one tool (12), and a sensing device (14) having at least one sensing roller (16) which is arranged adjacent to the tool (12) so as to be rotatable about its axis of rotation (17) and which controls the position of the tool (12) relative to the workpiece (30), wherein a diameter of the sensing roller (16) is adjustable, and the sensing roller (16) has a ring (18) which is expandable concentrically with the axis of rotation (17), **characterised in that**
a) the sensing device (14) has a pressure transfer means (15) for internally pressurising the ring (18),
or
b) the ring (18) is at least partly conically shaped on the inside and an element (21) which is at least partly conically shaped on the outside is provided and the ring (18) can be expanded by axially sliding the conical element (21) towards the ring (18) substantially along the axis of rotation (17) of the sensing roller (16).

2. Apparatus (1) according to claim 1,
**characterised in that**
the tool (12) is rotating about a tool axis (13), in particular a milling cutter, and the sensing roller (16) is arranged with its axis of rotation (17) coaxially with the tool axis (13).

3. Apparatus (1) according to claim 1,
**characterised in that**
the pressure transfer means (15) has a piston (19) for building up pressure, which extends at least partially within the sensing roller (16).

4. Apparatus (1) according to claim 3,
**characterised in that**
the piston (19) is driven piezoelectrically.

5. Apparatus (1) according to any of claims 1 to 4,
**characterised in that**
the sensing roller (16) is adjustable in diameter by axially squeezing the outer ring (18).

6. Apparatus (1) according to claim 1, **characterised in that** the ring (18) is a metal ring and/or plastic ring.

## Revendications

1. Système (1) pour l'usinage de pièces (30) préférentiellement en forme de plaques, préférentiellement au moins partiellement en bois, matériaux ligneux, matières synthétiques ou similaires, avec un agencement d'outils comprenant au moins un outil (12) agissant sur la pièce (30), et un dispositif palpeur (14) avec au moins un galet palpeur (16) disposé à côté de l'outil (12) et rotatif autour de son axe de rotation (17), et qui commande la position de l'outil (12) par rapport à la pièce (30), un diamètre du galet palpeur (16) étant réglable, et le galet palpeur (16) comportant une bague (18) rotative concentriquement à l'axe de rotation (17),
**caractérisé en ce que**
a) le dispositif palpeur (14) comporte un moyen de transmission de pression (15) pour une application interne de pression sur la bague (18),
ou **en ce que**
b) la bague (18) est de forme au moins partiellement conique à l'intérieur, **en ce qu'**un élément (21) de forme au moins partiellement conique est prévu à l'extérieur et **en ce que** la bague (18) peut être dilatée par poussée axiale contre celle de l'élément conique (21), sensiblement le long de l'axe de rotation (17) du galet palpeur (16).

2. Système (1) selon la revendication 1,
**caractérisé en ce que**
l'outil (12) est en particulier une fraise rotative autour d'un axe d'outil (13), et **en ce que** le galet palpeur (16) est disposé coaxialement à l'axe d'outil (13) par son axe de rotation (17).

3. Système (1) selon la revendication 1,
**caractérisé en ce que**
le moyen de transmission de pression (15) comporte un piston (19) pour la génération de pression, lequel s'étend au moins partiellement à l'intérieur du galet palpeur (16).

4. Système (1) selon la revendication 3,
**caractérisé en ce que**
le piston (19) est à commande piézoélectrique.

5. Système (1) selon l'une des revendications 1 à 4,
**caractérisé en ce que**
le galet palpeur (16) est déplaçable par écrasement axial du diamètre de la bague extérieure (18).

6. Système (1) selon la revendication 1,
**caractérisé en ce que**
la bague (18) est une bague métallique et/ou une bague en matière synthétique.
